# EUROPEAN PATENT APPLICATION

(11) **EP 4 850 952 A1**
(43) Date of publication of application: **09.12.2026**
(21) Application number: 25747768.7
(22) Date of filing: 23.01.2025
(51) Int. Cl.: B60K 11/02, B60K 1/00, B60K 17/04, B60R 16/02

(54) **ELECTRIC DRIVE ASSEMBLY AND VEHICLE**

(30) Priority: 31.01.2024 CN 202410140640
(71) Applicant: Geely Automobile Research Institute (Ningbo) Co., Ltd., Ningbo, Zhejiang 315336 (CN)
(72) Inventor: ZHAI, Hongjun, Hangzhou Bay New District, Ningbo, Zhejiang 315336 (CN); SUN, Wenjie, Hangzhou Bay New District, Ningbo, Zhejiang 315336 (CN); LIU, Yu, Hangzhou Bay New District, Ningbo, Zhejiang 315336 (CN)
(74) Representative: Boult Wade Tennant LLP
(86) International application number: PCT/CN2025/074459
(87) International publication number: WO 2025/162200

(57) **Abstract**

An electric drive assembly (10) relates to the field of new energy vehicles, and includes: a motor assembly (100); an electronic control assembly (200), disposed on a side of the motor assembly (100); and a cooling assembly (300), disposed between them; the motor assembly (100) includes a housing (110), a speed reducer (120), and a drive motor (130), the housing (110) is disposed to enclose the outside of the drive motor (130) and has a first housing portion (113) and a second housing portion (114), an accommodating cavity (115) is formed between the first housing portion (113) and the second housing portion (114), and the speed reducer (120) is disposed outside of the housing (110); the cooling assembly (300) includes a first cooling unit (310) disposed between the electronic control assembly (200) and the motor assembly (100) and a second cooling unit (320) disposed inside the accommodating cavity (115), the first cooling unit (310) and the second cooling unit (320) each have cooling channels sequentially communicated, and a cooling medium flows through the cooling channels to cool the electric drive assembly (10). A vehicle is also provided. The electric drive assembly and the vehicle shorten a path of a cooling water channel and improve the cooling efficiency.

## Description

This application claims priority to Chinese Patent Application No. 202410140640.6, filed with the China National Intellectual Property Administration on January 31, 2024, and entitled "ELECTRIC DRIVE ASSEMBLY AND VEHICLE", the entire content of which is incorporated in this application by reference.

### TECHNICAL FIELD

This application relates to but is not limited to the field of new energy vehicle technologies, and in particular, to an electric drive assembly and a vehicle.

### BACKGROUND

An electric drive assembly is a core part that determines the performance of a vehicle such as power and energy consumption. Its function is to convert chemical energy into the kinetic energy of an electric vehicle. It is a drive system using a motor as a power source, including a motor controller, a motor, and a speed reducer.

At present, motors, speed reducers, and motor controllers in the existing electric drive assembly of new energy vehicles are mostly of a split structure, with low integration, resulting in low space utilization. Moreover, cooling water channels disposed in the conventional electric drive assembly structures are two sets of cooling water channels, that is, a cooling system of a motor stator and a cooling system in the electronic control assembly are separately disposed.

However, in the cooling systems of this conventional electric drive assembly structure, a layout path of the water channels is long, and the cooling water flow resistance is relatively large, leading to low cooling efficiency.

### SUMMARY

The following is a summary of the subject matter described in detail herein. This summary is not intended to limit the scope of the claims.

The present application provides an electric drive assembly and a vehicle, which shorten a path of a cooling water channel, resulting in a small cooling water flow resistance and high cooling efficiency.

In a first aspect, the present application provides an electric drive assembly, including a motor assembly, an electronic control assembly, and a cooling assembly; where the electronic control assembly is disposed on a side of the motor assembly, and the cooling assembly is disposed between the electronic control assembly and the motor assembly; the motor assembly includes a housing, a speed reducer, and a drive motor; the housing is disposed to enclose an outside of the drive motor, and the housing has a first housing portion and a second housing portion that are sequentially spaced from the inside to the outside, an accommodating cavity surrounding the outside of the drive motor is formed between the first housing portion and the second housing portion, and the speed reducer is disposed outside of the housing and connected to an output end of the drive motor; and the cooling assembly includes a first cooling unit and a second cooling unit, the first cooling unit is disposed between the electronic control assembly and the motor assembly, the second cooling unit is disposed inside the accommodating cavity, the first cooling unit and the second cooling unit each have cooling channels sequentially communicated, and a cooling medium flows through the cooling channels of the first cooling unit and the second cooling unit to cool the electric drive assembly.

For the electric drive assembly described above, optionally, the cooling channel of the second cooling unit has a spiral shape and is coiled around the outside of the drive motor.

For the electric drive assembly described above, optionally, the housing has a water inlet and a water outlet which are communicated with the accommodating cavity, the water inlet is connected to a first-cooling-unit cooling-channel outlet, and the water outlet is connected to a second-cooling-unit cooling-channel outlet.

For the electric drive assembly described above, optionally, the housing further includes a partition portion connected between the first housing portion and the second housing portion to form a mounting area by isolation in the accommodating cavity, and a shape of the mounting area matches a shape of the cooling channel.

For the electric drive assembly described above, optionally, the electronic control assembly and the motor assembly are arranged in parallel in a vertical direction, and the electronic control assembly and the motor assembly are connected by a fastener.

For the electric drive assembly described above, optionally, the electronic control assembly includes a motor controller, an on-board charger, and a direct current-direct current converter; and the motor controller includes a resolver, a filter, and a capacitor, the resolver is electrically connected to the drive motor, and the filter and the capacitor are arranged in parallel in a filter housing.

For the electric drive assembly described above, optionally, the motor controller is provided with multiple input interfaces, and the multiple input interfaces are threaded interfaces.

For the electric drive assembly described above, optionally, the resolver includes a transformer body and a transformer housing disposed to enclose an outside of the transformer body, and a shielding cover is disposed on an inner side wall of the transformer housing; and the shielding cover is provided with at least one mounting portion, and is fixed to the transformer housing through the mounting portion, and the transformer housing and the filter housing are disposed on the electronic control assembly housing.

For the electric drive assembly described above, optionally, the housing further includes a front end cover disposed at one end of the drive motor, both the first housing portion and the second housing portion are connected to the front end cover; the front end cover is provided with an extension bracket, and the motor controller is disposed on the extension bracket.

In a second aspect, the present application provides a vehicle, including the electric drive assembly described above.

The present application provides an electric drive assembly and a vehicle, relating to the field of new energy vehicles. The electric drive assembly includes a motor assembly, an electronic control assembly, and a cooling assembly; the electronic control assembly is disposed on a side of the motor assembly, and the cooling assembly is disposed between the electronic control assembly and the motor assembly; the motor assembly includes a housing, a speed reducer, and a drive motor, the housing is disposed to enclose the outside of the drive motor and has a first housing portion and a second housing portion, an accommodating cavity is formed between the first housing portion and the second housing portion, and the speed reducer is disposed on the outside of the housing; the cooling assembly includes a first cooling unit and a second cooling unit, the first cooling unit is disposed between the electronic control assembly and the motor assembly, the second cooling unit is disposed inside the accommodating cavity, the first cooling unit and the second cooling unit each have cooling channels sequentially communicated, and a cooling medium flows through the cooling channels to cool the electric drive assembly. The electric drive assembly and the vehicle provided in the present application shorten a path of a cooling water channel and improve the cooling efficiency.

The structures of the electric drive assembly and the vehicle provided in the present application, as well as other application purposes and beneficial effects thereof, will be more clearly and easily understood through the description of the preferred embodiments in conjunction with the drawings. After reading and understanding the drawings and detailed description, other aspects can be understood.

### BRIEF DESCRIPTION OF THE DRAWINGS

FIG. 1 is a front view of an electric drive assembly provided in an embodiment of the present application.
FIG. 2 is a left view of an electric drive assembly provided in an embodiment of the present application.
FIG. 3 is a front view of a drive motor in an electric drive assembly provided in an embodiment of the present application.
FIG. 4 is a schematic structural diagram of a drive motor in an electric drive assembly provided in an embodiment of the present application from one perspective.
FIG. 5 is a schematic structural diagram of a drive motor in an electric drive assembly provided in an embodiment of the present application from another perspective.
FIG. 6 is a schematic diagram of a housing of a motor assembly in an electric drive assembly provided in an embodiment of the present application.
FIG. 7 is a cross-sectional view along A-A in FIG. 6.
FIG. 8 is a front view of a cooling assembly in an electric drive assembly provided in an embodiment of the present application.
FIG. 8a is a schematic structural diagram of a first cooling unit in an electric drive assembly provided in an embodiment of the present application.
FIG. 8b is a schematic structural diagram of a second cooling unit in an electric drive assembly provided in an embodiment of the present application.
FIG. 9 is a top view of a cooling assembly in an electric drive assembly provided in an embodiment of the present application.
FIG. 10 is a schematic structural diagram of a resolver of an electronic control assembly in an electric drive assembly provided in an embodiment of the present application.
FIG. 11 is a schematic structural diagram of a filter and a capacitor of an electronic control assembly in an electric drive assembly provided in an embodiment of the present application.

Description of reference numerals:
10-electric drive assembly;
100-motor assembly;
110-housing;
111-water inlet;
112-water outlet;
113-first housing portion;
114-second housing portion;
115-accommodating cavity;
120-speed reducer;
130-drive motor;
200-electronic control assembly;
210-fastener;
220-resolver;
230-shielding cover;
240-mounting portion;
250-filter housing;
260-capacitor;
270-filter;
280-transformer housing;
300-cooling assembly;
310-first cooling unit;
320-second cooling unit;
330-first-cooling-unit cooling-channel inlet;
340-first-cooling-unit cooling-channel outlet;
350-second-cooling-unit cooling-channel inlet;
360-second-cooling-unit cooling-channel outlet;
370-on-board charger and direct current-direct current converter water channel;
380-motor-controller water channel;
390-partition portion.

### DESCRIPTION OF EMBODIMENTS

To make the purposes, technical solutions and advantages of the embodiments of the present application clearer, the technical solutions in the embodiments of the present application will be clearly and completely described below with reference to the drawings in the embodiments of the present application. Apparently, the described embodiments are some but not all of the embodiments of the present application. All other embodiments obtained by a person of ordinary skill in the art based on the embodiments of the present application without creative efforts fall within the protection scope of the present application.

An electric drive assembly is a core part that determines the performance of a vehicle such as power and energy consumption. Its function is to convert chemical energy into the kinetic energy of an electric vehicle. It is a drive system using a motor as a power source, including a motor controller, a motor, and a speed reducer.

At present, motors, speed reducers, and motor controllers in the existing electric drive assembly of new energy vehicles are mostly of a split structure, with low integration, resulting in low space utilization. Moreover, cooling water channels disposed in the conventional electric drive assembly structures are two sets of cooling water channels, that is, a cooling system of a motor stator and a cooling system in the electronic control assembly are separately disposed.

However, in the cooling systems of this conventional electric drive assembly structure, a layout path of the water channels is long, and the cooling water flow resistance is relatively large, leading to low cooling efficiency.

To this end, the present application provides an electric drive assembly and a vehicle. A drive motor and a speed reducer are integrated into a motor assembly, a motor controller, a resolver, an on-board charger, etc. are integrated into the electronic control assembly, and the motor assembly and the electronic control assembly are connected through a fastener, which improves the utilization rate of the space inside the electric drive assembly and reduces a weight of the electric drive assembly; and the design of sharing a set of cooling system between the electronic control assembly and the motor assembly is adopted, and a cooling assembly is disposed between the motor assembly and the electronic control assembly, so that when cooling liquid flows through the inside of the cooling assembly, it can take away the heat of the motor assembly and the electronic control assembly. Compared with the conventional electric drive assembly structure, a path of a cooling water channel can be shortened, the water flow resistance can be reduced, and the cooling efficiency of the electric drive assembly can be improved.

The following is a further elaboration on an electric drive assembly in this embodiment.

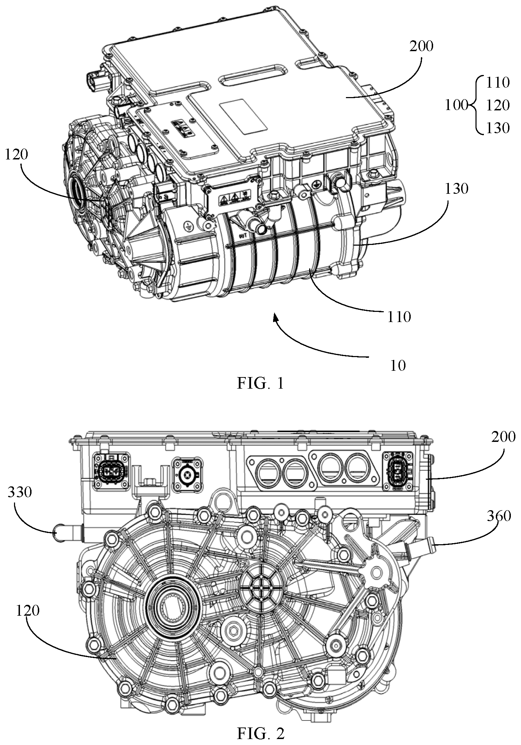

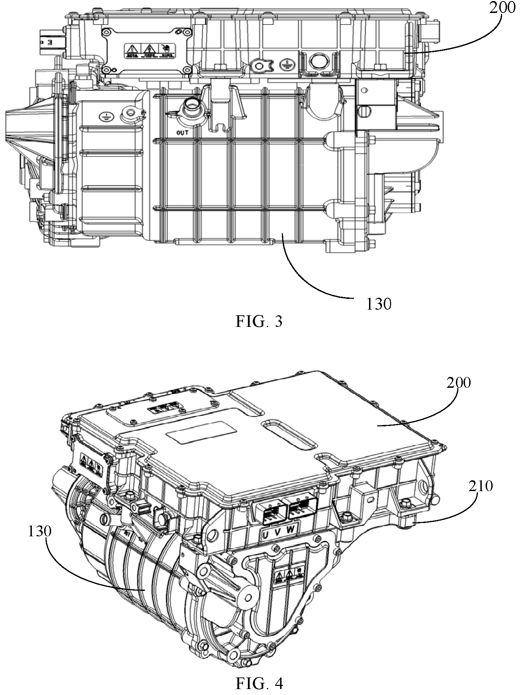

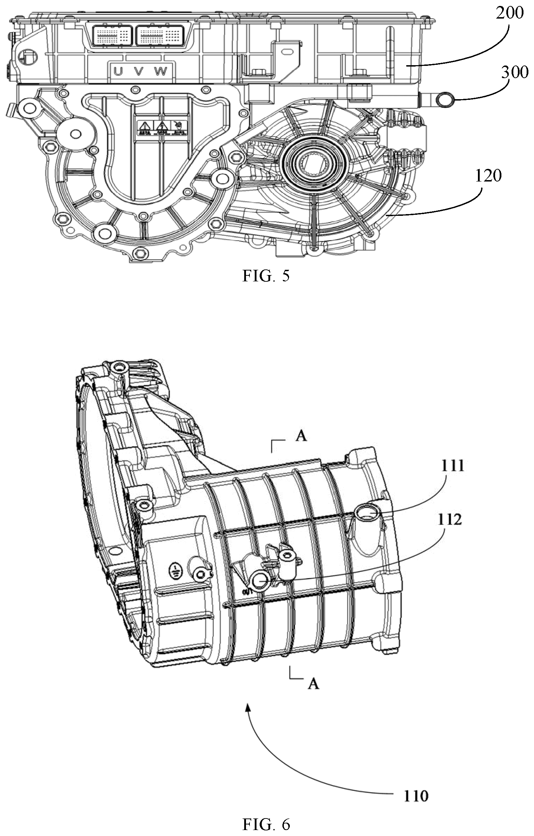

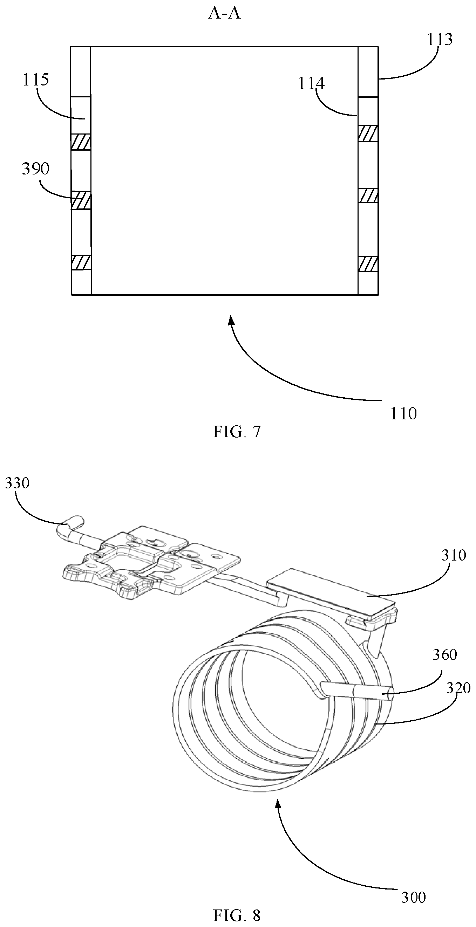

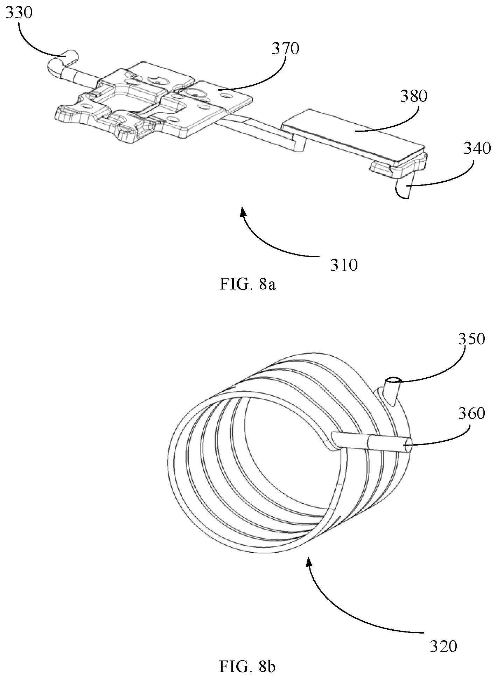

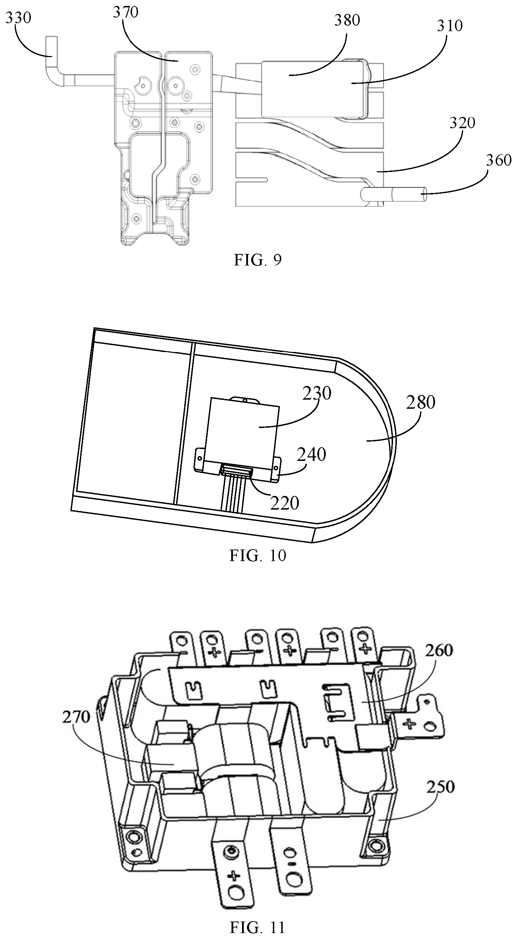

FIG. 1 is a front view of an electric drive assembly provided in an embodiment of the present application; FIG. 2 is a left view of an electric drive assembly provided in an embodiment of the present application; FIG. 3 is a front view of a drive motor in an electric drive assembly provided in an embodiment of the present application; FIG. 4 is a schematic structural diagram of a drive motor in an electric drive assembly provided in an embodiment of the present application from one perspective; FIG. 5 is a schematic structural diagram of a drive motor in an electric drive assembly provided in an embodiment of the present application from another perspective; FIG. 6 is a schematic diagram of a housing of a motor assembly in an electric drive assembly provided in an embodiment of the present application; FIG. 7 is a cross-sectional view along A-A in FIG. 6; FIG. 8 is a front view of a cooling assembly in an electric drive assembly provided in an embodiment of the present application; FIG. 8a is a schematic structural diagram of a first cooling unit in an electric drive assembly provided in an embodiment of the present application; FIG. 8b is a schematic structural diagram of a second cooling unit in an electric drive assembly provided in an embodiment of the present application; FIG. 9 is a top view of a cooling assembly in an electric drive assembly provided in an embodiment of the present application; FIG. 10 is a schematic structural diagram of a resolver of an electronic control assembly in an electric drive assembly provided in an embodiment of the present application; and FIG. 11 is a schematic structural diagram of a filter and a capacitor of an electronic control assembly in an electric drive assembly provided in an embodiment of the present application.

As shown in FIG. 1 to FIG. 3, an embodiment of the present application provides an electric drive assembly 10, including a motor assembly 100, an electronic control assembly 200, and a cooling assembly 300; the electronic control assembly 200 is disposed on a side of the motor assembly 100, and the cooling assembly 300 is disposed between the electronic control assembly 200 and the motor assembly 100; the motor assembly 100 includes a housing 110, a speed reducer 120, and a drive motor 130; the housing 110 is disposed to enclose the outside of the drive motor 130, and the housing 110 has a first housing portion 113 and a second housing portion 114 that are sequentially spaced from the inside to the outside, an accommodating cavity 115 surrounding the outside of the drive motor 130 is formed between the first housing portion 113 and the second housing portion 114, and the speed reducer 120 is disposed outside of the housing 110 and connected to an output end of the drive motor 130; the cooling assembly 300 includes a first cooling unit 310 and a second cooling unit 320, the first cooling unit 310 is disposed between the electronic control assembly 200 and the motor assembly 100, the second cooling unit 320 is disposed inside the accommodating cavity 115, the first cooling unit 310 and the second cooling unit 320 each have cooling channels sequentially communicated, and a cooling medium flows through the cooling channels of the first cooling unit 310 and the second cooling unit 320 to cool the electric drive assembly 10.

A cooling system in this embodiment is a closed forced circulation water cooling system, and the cooling process of the electric drive assembly 10 is controlled by a thermal management system of a vehicle. Specifically, a cooling liquid provided in the thermal management system of the vehicle first enters an on-board charger and direct current-direct current converter water channel 370 through a first-cooling-unit cooling-channel inlet 330, and takes away the heat generated thereby through heat exchange. At this time, a temperature of the cooling liquid rises, and then the cooling liquid flows into a motor-controller water channel 380, and takes away the heat generated thereby through heat exchange. At this time, the temperature of the cooling liquid rises again, and then the cooling liquid flows into the second cooling unit 320 through a second-cooling-unit cooling-channel inlet 350, and takes away the heat generated by the drive motor 130 through heat exchange with the housing 110. At this time, the cooling liquid flows back to the thermal management system of the vehicle through a second-cooling-unit cooling-channel outlet 360, undergoes heat exchange in the thermal management system, and flows into the first-cooling-unit cooling-channel inlet 330 again after its temperature decreases, completing one cooling cycle.

The first cooling unit 310 includes a motor-controller water channel 380 and an on-board charger and direct current-direct current converter water channel 370. As shown in FIG. 9, the motor-controller water channel 380, and the on-board charger and direct current-direct current converter water channel 350 are arranged in a straight line, and the second cooling unit 320 is spirally disposed below the motor-controller water channel 380, which can shorten a path of the cooling water channel and reduce the cooling liquid flow resistance.

It should be noted that, to avoid the cooling liquid from freezing at low temperatures, the cooling liquid is a mixture of water and ethylene glycol in a ratio of 1:1, which can reduce its freezing point to -40°C.

In this way, the drive motor 130 and the speed reducer 120 are integrated into the motor assembly 100; a motor controller, the resolver 220, the on-board charger, etc. are integrated into the electronic control assembly 200; and the motor assembly 100 and the electronic control assembly 200 are connected through a fastener 210, which improves the utilization rate of the space inside the electric drive assembly 10 and reduces a weight of the electric drive assembly 10. The design of sharing a set of cooling system between the electronic control assembly 200 and the motor assembly 100 is adopted, and the cooling assembly 300 is disposed between the motor assembly 100 and the electronic control assembly 200, so that when the cooling liquid flows through the inside of the cooling assembly 300, it can take away the heat of the motor assembly 100 and the electronic control assembly 200. Compared with the conventional electric drive assembly structure, the path of the cooling water channel can be shortened, the water flow resistance can be reduced, and the cooling efficiency of the electric drive assembly can be improved.

In some embodiments, the cooling channel of the second cooling unit 320 has a spiral shape and is coiled around the outside of the drive motor 130. Specifically, the cooling channel on a side in contact with the drive motor 130 is flat. The purpose of this design is to increase a contact area with the second housing portion 114, improve the heat conduction efficiency, and make the heat transfer uniform.

In some embodiments, the housing 110 has a water inlet 111 and a water outlet 112 which are communicated with the accommodating cavity 115, the water inlet 111 is connected to the first-cooling-unit cooling-channel outlet 340, and the water outlet 112 is connected to the second-cooling-unit cooling-channel outlet 360.

The cooling assembly 300 is fixed on the electronic control assembly 200 by a strap. Specifically, the first cooling unit 310 is provided with the first-cooling-unit cooling-channel inlet 330 and the first-cooling-unit cooling-channel outlet 340, and the second cooling unit 320 is provided with the second-cooling-unit cooling-channel inlet 350 and the second-cooling-unit cooling-channel outlet 360. As shown in FIG. 8a and FIG. 8b, the first-cooling-unit cooling-channel outlet 340 and the second-cooling-unit cooling-channel inlet 350 are connected by means of interference fit.

In some embodiments, the housing 110 further includes a partition portion 390, which is connected between the first housing portion 113 and the second housing portion 114 to form a mounting area by isolation in the accommodating cavity 115, and a shape of the mounting area matches a shape of the cooling channel.

The partition portion 390 has two types: folded-back type and spiral type. Optionally, the spiral partition portion 390 is adopted in this embodiment and distributed on the second housing portion 114, as shown in FIG. 7, specifically, a certain distance is provided between two adjacent spiral tubes in the second cooling unit 320 for snap-fitting with the partition portion 390, which can ensure the connection stability of the second cooling unit 320.

In some embodiments, the electronic control assembly 200 and the motor assembly 100 are arranged in parallel in a vertical direction, and the electronic control assembly 200 and the motor assembly 100 are connected by a fastener 210.

Mounting holes are provided around the electronic control assembly 200, and the fasteners 210 pass through the mounting holes to detachably connect the electronic control assembly 200 and the motor assembly 100; as shown in FIG. 4, the purpose of this design is to facilitate the later maintenance and replacement of the internal components of the electronic control assembly 200 and the motor assembly 100. Specifically, the type of the fastener 210 can be bolts, nuts, or others, which is not limited in this embodiment.

In some embodiments, the electronic control assembly 200 includes a motor controller, an on-board charger, and a direct current-direct current converter; the motor controller includes a resolver 220, a filter 270, and a capacitor 260, the resolver 220 is electrically connected to the drive motor 130, and the filter 270 and the capacitor 260 are arranged in parallel in a filter housing 250, as shown in FIG. 11.

The capacitor 260 is mainly composed of a film capacitor and positive and negative output copper bars, and the filter 270 is composed of an input copper bar, two magnetic rings, and four safety capacitors. The space between the capacitor 260 and the filter 270 is filled and fixed with epoxy glue to play the roles of insulation and heat conduction. Specifically, the high-voltage direct current in the power battery passes through the input copper bar, is filtered by the filter 270, and then connected to the output copper bar. The film capacitor is connected in parallel between the positive and negative copper bars to smooth the bus voltage, and the positive and negative copper bars are overlapped to eliminate stray inductance.

The number of input interfaces of the filter 270 is two, and the input interfaces are connected to the direct current bus connector, thereby connecting to a power battery as high-voltage input. The capacitor 260 has six output interfaces, which are respectively connected to the input ports of an insulate-gate bipolar transistor (Insulate-Gate Bipolar Transistor, IGBT) power module to provide high-voltage power for the IGBT.

To reduce the weight of the electronic control assembly 200, the motor controller, the on-board charger, and the direct current-direct current converter are integrated into a single unit. Specifically, the on-board charger and the direct current-direct current converter are adjacently disposed at one end of the electronic control assembly 200. The on-board charger is provided with a slow charging interface for converting alternating current from the power grid into direct current to charge the electric vehicle battery, and the direct current-direct current converter converts the high-voltage direct current in a vehicle battery into low-voltage direct current to supply power to the on-board power supply and the functional modules on its electric circuit.

It should be supplemented that the electronic control assembly 200 further includes a power distribution unit (Power Distribution Unit, PDU), which electrically connects high-voltage components through busbars and wiring harnesses, provides functions such as charge and discharge control, high-voltage component power-on control, circuit overload and short-circuit protection, high-voltage sampling, and low-voltage control for a high-voltage system of a new energy vehicle, and protects and monitors the operation of the high-voltage system.

It should be supplemented that the electronic control assembly 200 further includes a vehicle control unit (Vehicle Control Unit, VCU), which is responsible for the normal driving of the vehicle, braking energy recovery, energy management of a vehicle drive system and power battery, network management, fault diagnosis and handling, vehicle state monitoring and so on, so as to ensure the normal and stable operation of the vehicle under good dynamic performance, and high economy and reliability.

The resolver 220 is a position sensor used to reflect a position, speed, and rotation direction of a rotor of the drive motor 130. The resolver 220 includes a stator and a rotor. Specifically, the stator of the resolver 220 is mounted on a rear end cover of the drive motor 130, and the rotor is mounted on a motor shaft and rotates with the motor shaft.

In some embodiments, the motor controller is provided with multiple input interfaces, where multiple input interfaces are divided into a direct current bus high-voltage line interface and a direct current fast charging high-voltage line interface, and multiple input interfaces are threaded interfaces. The purpose of this arrangement is to eliminate two connector bases and the high-voltage interlock wire structure in the quick-connect interface mode, save costs, and achieve a more reliable connection.

In some embodiments, the resolver 220 includes a transformer body and a transformer housing 280 surrounding the outside of the transformer body, and a shielding cover 230 is disposed on an inner side wall of the transformer housing 280; and the shielding cover 230 is provided with at least one mounting portion 240, the shielding cover 230 is fixed to the transformer housing 280 through the mounting portion 240, and the transformer housing 280 and the filter housing 250 are disposed on the electronic control assembly housing.

As shown in FIG. 10, three mounting portions are provided along a circumferential direction of the shielding cover 230, threaded holes are provided in the mounting portions, and screws pass through the threaded holes to firmly install the shielding cover 230 on the transformer housing 280. Specifically, the shielding cover 230 has a rectangular shape, which can completely cover the resolver 220. The purpose of this design is to prevent electromagnetic radiation caused by the resolver 220 during operation, and also to protect the resolver 220 from malfunctions caused by external interference.

Specifically, a material of the shielding cover 230 is stainless steel. The purpose of this arrangement is that electronic elements often need to work in a humid and highly corrosive environment, and the stainless steel material has strong corrosion resistance and a long service life.

In some embodiments, the housing 110 further includes a front end cover, which is disposed at one end of the drive motor 130, and both the first housing portion 113 and the second housing portion 114 are connected to the front end cover; and
an extension bracket is disposed on the front end cover, and the motor controller is disposed on the extension bracket.

The first housing portion 113 is integrally formed with the front end cover, and the second housing portion 114 is sleeved on the first housing portion 113. Specifically, the extension bracket is provided with a mounting hole, and a bolt passes through the mounting hole to connect the motor controller to the bracket.

In some embodiments, a vehicle includes the electric drive assembly 10 described above.

The speed reducer 120 adopts self-agitating oil splash cooling and lubrication, and dissipates heat through heat exchange between a speed reducer housing and air. Specifically, the electric drive assembly 10 described above is applicable to electric cars and also to electric pickup trucks.

In this embodiment, an electric drive assembly 10 includes a motor assembly 100, an electronic control assembly 200, and a cooling assembly 300; the electronic control assembly 200 is disposed on a side of the motor assembly 100, and the cooling assembly 300 is disposed between the electronic control assembly 200 and the motor assembly 100; the motor assembly 100 includes a housing 110, a speed reducer 120, and a drive motor 130; the housing 110 is disposed to enclose the outside of the drive motor 130, and the housing 110 has a first housing portion 113 and a second housing portion 114 that are sequentially spaced from the inside to the outside, an accommodating cavity 115 surrounding the outside of the drive motor 130 is formed between the first housing portion 113 and the second housing portion 114, and the speed reducer 120 is disposed on the outside of the housing 110 and connected to an output end of the drive motor 130; the cooling assembly 300 includes a first cooling unit 310 and a second cooling unit 320, the first cooling unit 310 is disposed between the electronic control assembly 200 and the motor assembly 100, the second cooling unit 320 is disposed inside the accommodating cavity 115, the first cooling unit 310 and the second cooling unit 320 each have cooling channels sequentially communicated, and a cooling medium flows through the cooling channels of the first cooling unit 310 and the second cooling unit 320 to cool the electric drive assembly 10. In this way, the drive motor 130 and the speed reducer 120 are integrated into the motor assembly 100, the motor controller, resolver 220, on-board charger, etc. are integrated into the electronic control assembly 200, and the motor assembly 100 and the electronic control assembly 200 are connected through a fastener 210, which improves the utilization rate of the space inside the electric drive assembly 10 and reduces a weight of the electric drive assembly 10; the design of sharing a set of cooling system between the electronic control assembly 200 and the motor assembly 100 is adopted, and the cooling assembly 300 is disposed between the motor assembly 100 and the electronic control assembly 200, so that when the cooling liquid flows through the inside of the cooling assembly 300, it can take away the heat from the motor assembly 100 and the electronic control assembly 200. Compared with the conventional electric drive assembly structure, a path of the cooling water channel can be shortened, the water flow resistance can be reduced, and the cooling efficiency of the electric drive assembly can be improved.

Terms such as "first" and "second" in the embodiments of the present application are used to distinguish similar objects, and are not necessarily used to describe a specific order or sequence. It should be understood that data used in this manner may be interchanged in appropriate cases, such that the embodiments of the present application described herein are implemented. In addition, the terms "include" and "have" and any variations thereof are intended to cover non-exclusive inclusion.

In the embodiments of the present application, the orientations or positional relationships indicated by the terms "upper", "lower", "inner", "middle", "outer", "front", "rear", etc. are based on the orientations or positional relationships shown in the drawings. These terms are mainly used to better describe the present application and embodiments thereof, and are not used to limit that the indicated device, element, or component must have a specific orientation or be constructed and operated in a specific orientation. Moreover, some of the above terms may also be used to indicate other meanings besides the orientation or positional relationship, for example, the term "above" may also be used to indicate a certain attachment relationship or connection relationship in some cases. For those of ordinary skill in the art, the specific meanings of these terms in the embodiments of the present application can be understood according to specific situations.

In addition, the terms "disposed", "connected", and "fixed" should be understood in a broad sense. For example, "connected" may be a fixed connection, a detachable connection, or an integral construction; it may be a mechanical connection or an electrical connection; it may be a direct connection, or an indirect connection through an intermediate medium, or internal communication between two devices, elements, or components. For those of ordinary skill in the art, the specific meanings of the above terms in the embodiments of the present disclosure can be understood according to specific situations.

It should be noted that references to "one embodiment", "an embodiment", "exemplary embodiment", "some embodiments", etc. in the specification mean that the described embodiment may include specific features, structures, or characteristics, but not every embodiment necessarily includes the specific features, structures, or characteristics. Furthermore, such phrases do not necessarily refer to the same embodiment. In addition, when specific features, structures, or characteristics are described in conjunction with an embodiment, it is within the knowledge scope of those skilled in the art to implement such features, structures, or characteristics in connection with other explicitly or implicitly described embodiments.

In general, the terms should be understood at least in part based on the context of use. For example, at least in part based on the context, the term "one or more" as used herein may be used to describe any feature, structure, or characteristic in a singular sense, or may be used to describe a combination of features, structures, or characteristics in a plural sense. Similarly, at least in part based on the context, the term such as "a" or "an" may also be understood as conveying a singular use or a plural use.

Finally, it should be noted that the above embodiments are only used to illustrate the technical solutions of the present application, but not to limit them; although the present application is illustrated in detail with reference to the aforementioned embodiments, those of ordinary skill in the art should understand that the technical solutions described in the aforementioned embodiments may still be modified or some or all of the technical features therein may be equivalently replaced; and these modifications or replacement do not make the essence of the corresponding technical solutions deviate from the scope of the technical solutions of the embodiments of the present application.

## Claims

1. An electric drive assembly, **characterized by** comprising a motor assembly, an electronic control assembly, and a cooling assembly; wherein the electronic control assembly is disposed on a side of the motor assembly, and the cooling assembly is disposed between the electronic control assembly and the motor assembly;
the motor assembly comprises a housing, a speed reducer, and a drive motor; the housing is disposed to enclose an outside of the drive motor, and the housing has a first housing portion and a second housing portion that are sequentially spaced from the inside to the outside, an accommodating cavity surrounding the outside of the drive motor is formed between the first housing portion and the second housing portion, and the speed reducer is disposed outside of the housing and connected to an output end of the drive motor; and
the cooling assembly comprises a first cooling unit and a second cooling unit, the first cooling unit is disposed between the electronic control assembly and the motor assembly, the second cooling unit is disposed inside the accommodating cavity, the first cooling unit and the second cooling unit each have cooling channels sequentially communicated, and a cooling medium flows through the cooling channels of the first cooling unit and the second cooling unit to cool the electric drive assembly.

2. The electric drive assembly according to claim 1, wherein the cooling channel of the second cooling unit has a spiral shape, and is coiled around the outside of the drive motor.

3. The electric drive assembly according to claim 1, wherein the housing has a water inlet and a water outlet which are communicated with the accommodating cavity, the water inlet is connected to a first-cooling-unit cooling-channel outlet, and the water outlet is connected to a second-cooling-unit cooling-channel outlet.

4. The electric drive assembly according to claim 3, wherein the housing further comprises a partition portion connected between the first housing portion and the second housing portion to form a mounting area by isolation in the accommodating cavity, and a shape of the mounting area matches a shape of the cooling channel.

5. The electric drive assembly according to any one of claims 1 to 4, wherein the electronic control assembly and the motor assembly are arranged in parallel in a vertical direction, and the electronic control assembly and the motor assembly are connected by a fastener.

6. The electric drive assembly according to claim 5, wherein the electronic control assembly comprises a motor controller, an on-board charger, and a direct current-direct current converter; and
the motor controller comprises a resolver, a filter, and a capacitor, the resolver is electrically connected to the drive motor, and the filter and the capacitor are arranged in parallel in a filter housing.

7. The electric drive assembly according to claim 6, wherein the motor controller is provided with multiple input interfaces, and the multiple input interfaces are threaded interfaces.

8. The electric drive assembly according to claim 6, wherein the resolver comprises a transformer body and a transformer housing disposed to enclose an outside of the transformer body, and a shielding cover is disposed on an inner side wall of the transformer housing; and the shielding cover is provided with at least one mounting portion, and is fixed to the transformer housing through the mounting portion, and the transformer housing and the filter housing are disposed on an electronic control assembly housing.

9. The electric drive assembly according to any one of claims 1 to 4, wherein the housing further comprises a front end cover disposed at one end of the drive motor, and both the first housing portion and the second housing portion are connected to the front end cover; and
the front end cover is provided with an extension bracket, and the motor controller is disposed on the extension bracket.

10. A vehicle, **characterized by** comprising the electric drive assembly according to any one of claims 1 to 9.
